# EUROPEAN PATENT APPLICATION

(11) **EP 3 751 389 A1**
(43) Date of publication of application: **16.12.2020**
(21) Application number: 20179371.8
(22) Date of filing: 10.06.2020
(51) Int. Cl.: G06F 1/16, G06F 3/01, G06F 3/041

(54) **ELECTRONIC DEVICE INCLUDING FORCE SENSOR**

(30) Priority: 14.06.2019 KR 20190070928
(71) Applicant: Samsung Electronics Co., Ltd., Gyeonggi-do 16677 (KR)
(72) Inventor: PARK, Hyeongsoon, 16677 Suwon-si, (KR); CHO, Jeonggyu, 16677 Suwon-si, (KR)
(74) Representative: HGF

(57) **Abstract**

An electronic device is provided. The electronic device includes a first plate (420), a second plate (480) that is located to face the first plate and that includes a curved portion (481) extending to a lateral surface portion of the electronic device, a support member (410) of the electronic device that is located between the first plate and the second plate, a force sensor (490) located in an interior space formed between the first plate and the second plate, the force sensor including a force sensing surface and a sensing assistance structure (411) protruding from the support member to a space between the force sensor and the curved portion. The force sensing surface of the force sensor faces one surface of the sensing assistance structure.

## Description

### CROSS-REFERENCE TO RELATED APPLICATION(S)

This application is based on and claims priority under 35 U.S.C. § 119(a) of a Korean patent application number 10-2019-0070928, filed on June 14, 2019, in the Korean Intellectual Property Office, the disclosure of which is incorporated by reference herein its entirety.

### BACKGROUND

### 1. Field

The disclosure relates to an electronic device including a force sensor.

### 2. Description of Related Art

An electronic device may include an input device for receiving an input for an operation of the electronic device from a user. When receiving an input through the input device, the electronic device may identify the received input and may perform an operation depending on an outcome of the identification to provide a service to the user.

The above information is presented as background information only to assist with an understanding of the disclosure. No determination has been made, and no assertion is made, as to whether any of the above might be applicable as prior art with regard to the disclosure.

### SUMMARY

Aspects of the disclosure are to address at least the above-mentioned problems and/or disadvantages and to provide at least the advantages described below. Accordingly, an aspect of the disclosure is to provide an electronic device including a force sensor for sensing a force on a side surface of the electronic device to provide various experiences to a user.

Additional aspects will be set forth in part in the description which follows and, in part, will be apparent from the description, or may be learned by practice of the presented embodiments.

In accordance with an aspect of the disclosure, an electronic device is provided. The electronic device includes a first plate, a second plate that is located to face the first plate and that includes a curved portion extending to a lateral surface portion of the electronic device, a support member of the electronic device that is located between the first plate and the second plate, a force sensor located in an interior space formed between the first plate and the second plate, the force sensor including a force sensing surface, and a sensing assistance structure protruding from the support member to a space between the force sensor and the curved portion, wherein the force sensing surface of the force sensor faces one surface of the sensing assistance structure.

In accordance with an aspect of the disclosure, first plate may cover a display area of a display located in the interior space, and the sensing assistance structure may have a curved surface that faces the curved portion. A waterproof member may be located between the sensing assistance structure and the curved portion, and the waterproof member may be in close contact with the sensing assistance structure and the curved portion.

In accordance with an aspect of the disclosure, a side bezel structure of the electronic device that connects the first plate and the second plate and the sensing assistance structure may be integrally formed with each other.

In accordance with an aspect of the disclosure, the support member that forms a skeleton of the electronic device, and the sensing assistance structure may be integrally formed with at least one of the first plate or the second plate.

In accordance with an aspect of the disclosure, the support member may include a furrow corresponding to the force sensor.

In accordance with an aspect of the disclosure, the force sensor may be located between the furrow and the sensing assistance structure.

In accordance with an aspect of the disclosure, the second plate may include a protrusion on an area of the curved portion corresponding to the force sensor.

In accordance with an aspect of the disclosure, the force sensor may include a plurality of sensing channels that generate signals, respectively.

In accordance with an aspect of the disclosure, the electronic device may further include at least one processor connected with the force sensor. The force sensor may be configured to transfer, to the at least one processor, a signal corresponding to a user input on the curved portion, and the at least one processor may be configured to perform an operation corresponding to the signal received by the at least one processor.

In accordance with an aspect of the disclosure, the at least one processor may be configured to control a volume of audio of output by the electronic device based on the at least one processor identifying the signal received by the at least one processor as a slide input.

In accordance with an aspect of the disclosure, the at least one processor may further be configured to perform an operation of turning on or off the electronic device based on the at least one processor identifying the received signal as a long touch input.

In accordance with another aspect of the disclosure, an electronic device is provided. The electronic device includes a first plate, a second plate facing the first plate, the second plate including a curved portion extending to a lateral surface portion of the electronic device, a support member of the electronic device located between the first plate and the second plate, a sensor support structure protruding from the support member, and a force sensor located between the sensor support structure and the curved portion.

In accordance with an aspect of the disclosure, the first plate may cover a display area of a display located in an interior space formed between the first plate and the second plate, the sensor support structure may have a curved surface that faces the curved portion, the force sensor may have shaped to bend along the curved surface of the sensor support structure, and a waterproof member that covers at least one surface of the force sensor may be located between the curved surface of the sensor support structure and the curved portion.

In accordance with an aspect of the disclosure, a side bezel structure of the electronic device that connects the first plate and the second plate and the sensor support structure may be integrally formed with each other.

In accordance with an aspect of the disclosure, the sensor support structure may further include a furrow corresponding to the force sensor, and the force sensor may be located between the furrow and the curved portion.

In accordance with an aspect of the disclosure, the second plate may include a protrusion on an area of the curved portion corresponding to the force sensor.

In accordance with an aspect of the disclosure, the force sensor may include a plurality of sensing channels that generate corresponding signals.

In accordance with an aspect of the disclosure, the electronic device may further include at least one processor connected with the force sensor. The force sensor may be configured to transfer, to the at least one processor, a signal corresponding to a user input on the curved portion, and the at least one processor may be configured to perform an operation corresponding to the signal received by the at least one processor.

In accordance with an aspect of the disclosure, the at least one processor may further be configured to control a volume of audio output by the electronic device based on the at least one processor identifying the signal received by the at least one processor as a slide input.

In accordance with an aspect of the disclosure, the at least one processor may further be configured to perform an operation of turning on or off the electronic device based on the at least one processor identifying the received signal as a long touch input.

In accordance with an aspect of the disclosure, the curved portion may include a left curved portion and a right curved portion of the second plate. The sensor support structure may include a left sensor support structure and a right sensor support structure. The force sensor may include a left force sensor located between the left curved portion and the left sensor support structure, and a right force sensor located between the right curved portion and the right sensor support structure.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a front perspective view of an electronic device according to an embodiment of the disclosure;
FIG. 2 is a rear perspective view of the electronic device of FIG. 1 according to an embodiment of the disclosure;
FIG. 3 is an exploded perspective view of the electronic device of FIG. 1 according to an embodiment of the disclosure;
FIG. 4 is a sectional view of the electronic device taken along line A-A' of FIG. 2 according to an embodiment of the disclosure;
FIG. 5 is an enlarged view illustrating a curved portion of a back plate of the electronic device of FIG. 4 according to an embodiment of the disclosure;
FIGS. 6 and 7 illustrate graphs depicting magnitudes of signals generated by a force sensor when a user touches the curved portion of FIG. 4 according to various embodiments of the disclosure;
FIG. 8 is an enlarged view illustrating the curved portion of the back plate of the electronic device of FIG. 4 according to an embodiment of the disclosure;
FIG. 9 illustrates a graph depicting magnitude of a signal generated by the force sensor when the user touches the curved portion of FIG. 4 according to an embodiment of the disclosure;
FIG. 10 is a sectional view of an electronic device according to an embodiment of the disclosure;
FIG. 11 is a sectional view of an electronic device according to an embodiment of the disclosure;
FIG. 12 is a sectional view of an electronic device according to an embodiment of the disclosure;
FIG. 13 is a sectional view of an electronic device according to an embodiment of the disclosure;
FIG. 14 is an enlarged view illustrating a curved portion of a back plate of an electronic device according to an embodiment of the disclosure;
FIG. 15 is an enlarged view illustrating a curved portion of a back plate of an electronic device according to an embodiment of the disclosure;
FIG. 16 is a block diagram illustrating a circuit configuration of an electronic device according to an embodiment of the disclosure;
FIG. 17 is a block diagram illustrating a circuit configuration of an electronic device according to an embodiment of the disclosure;
FIG. 18 is a view illustrating a curved portion of a back plate of an electronic device according to an embodiment of the disclosure;
FIG. 19 is a view illustrating a case where a user holds an electronic device with the left hand according to an embodiment of the disclosure;
FIG. 20 is a view illustrating a case where the user holds the electronic device with the right hand according to an embodiment of the disclosure;
FIG. 21 is a view illustrating a force sensor of an electronic device according to an embodiment of the disclosure;
FIG. 22 is a view illustrating a section of the electronic device to which the force sensor of FIG. 21 is applied according to an embodiment of the disclosure;
FIG. 23 is a sectional view of an electronic device according to an embodiment of the disclosure; and
FIG. 24 is a perspective view illustrating a rear side of an electronic device according to an embodiment of the disclosure.

Throughout the drawings, like reference numerals will be understood to refer to like parts, components, and structures.

### DETAILED DESCRIPTION

The following description with reference to accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

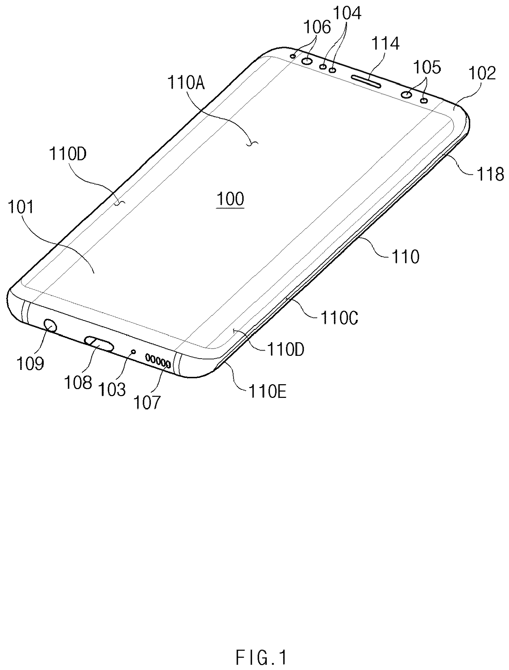

Hereinafter, a structure of an electronic device according to an embodiment will be described with reference to FIGS. 1 to 4.

FIG. 1 is a front perspective view of the electronic device according to an embodiment of the disclosure.

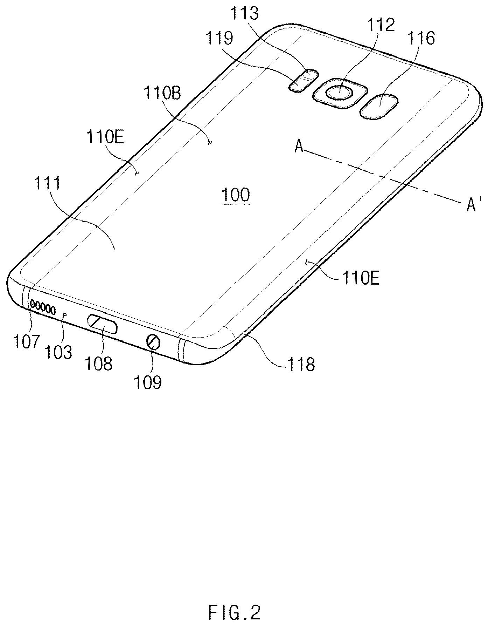

FIG. 2 is a rear perspective view of the electronic device of FIG. 1 according to an embodiment of the disclosure.

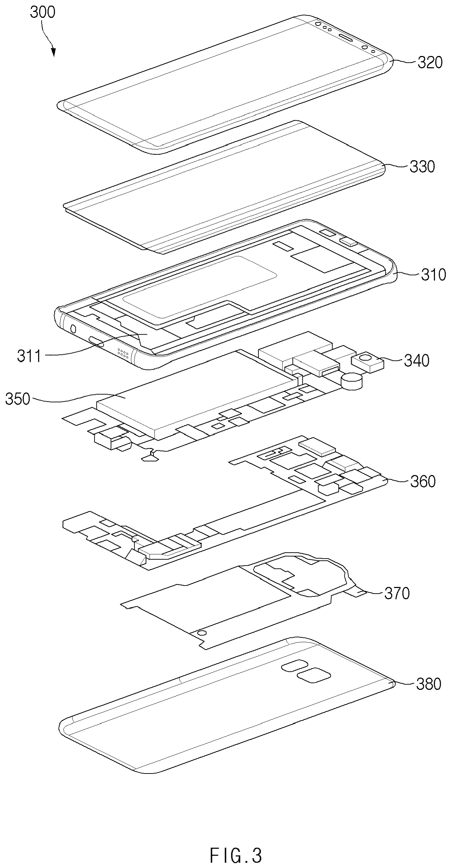

FIG. 3 is an exploded perspective view of the electronic device of FIG. 1 according to an embodiment of the disclosure.

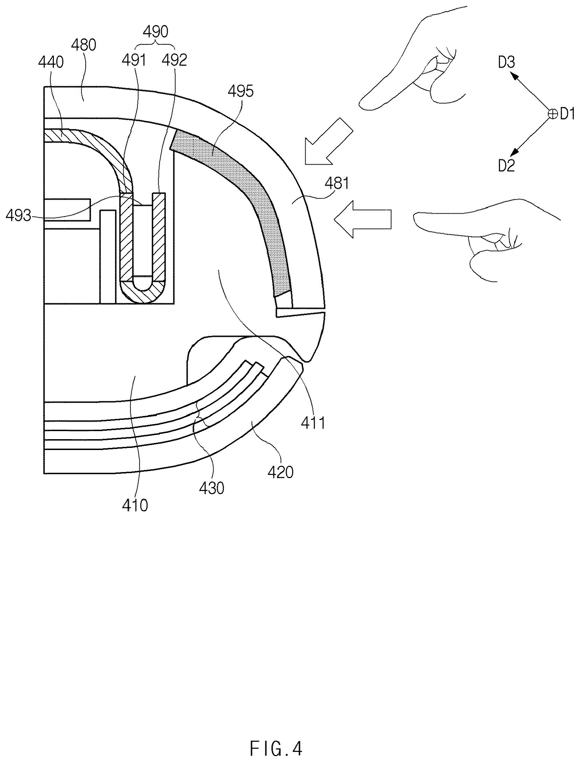

FIG. 4 is a sectional view of the electronic device taken along line A-A' of FIG. 2 according to an embodiment of the disclosure.

Referring to FIGS. 1 and 2, the electronic device 100 according to the embodiment may include a housing 110 that includes a first surface (or a front surface) 110A, a second surface (or a rear surface) 110B, and side surfaces 110C that surround a space between the first surface 110A and the second surface 110B. In another embodiment (not illustrated), a housing may refer to a structure that forms the first surface 110A, the second surface 110B, and a part of the side surfaces 110C of FIG. 1. According to an embodiment, the first surface 110A may be formed by a front plate 102, at least part of which is substantially transparent (e.g., a glass plate including various coating layers, or a polymer plate). The second surface 110B may be formed by a back plate 111 that is substantially opaque. The back plate 111 may be formed by, for example, coated or colored glass, ceramic, polymer, metal (e.g., aluminum, stainless steel (STS), or magnesium), or a combination of at least two thereof. The side surfaces 110C may be formed by a side bezel structure (or a "side member") 118 that is coupled with the front plate 102 and the back plate 111 and that contains metal and/or polymer.

In the illustrated embodiment, the front plate 102 may include, at opposite long edges thereof, two first areas 110D that curvedly and seamlessly extend from the first surface 110A toward the back plate 111. In the illustrated embodiment (refer to FIG. 2), the back plate 111 may include, at opposite long edges thereof, two second areas 110E that curvedly and seamlessly extend from the second surface 110B toward the front plate 102. In some embodiments, the front plate 102 (or the back plate 111) may include only one of the first areas 110D (or the second areas 110E). In another embodiment, a part of the first areas 110D or the second areas 110E may not be included. In the embodiments, when viewed from a side of the electronic device 100, the side bezel structure 118 may have a first thickness (or width) at sides not including the first areas 110D or the second areas 110E and may have a second thickness at sides including the first areas 110D or the second areas 110E, the second thickness being smaller than the first thickness.

According to an embodiment, the electronic device 100 may include at least one of a display 101, audio modules 103, 107, and 114, sensor modules 104, 116, and 119, camera modules 105, 112, and 113, a light emitting element 106, and connector holes 108 and 109. In some embodiments, the electronic device 100 may omit at least one component (e.g., the light emitting element 106) among the aforementioned components, or may additionally include other component(s).

The display 101 may be exposed through, for example, a large portion of the front plate 102. In some embodiments, at least part of the display 101 may be exposed through the front plate 102 that forms the first surface 110A and the first areas 110D of the side surfaces 110C. In some embodiments, corners of the display 101 may be formed to be substantially the same as the shapes of adjacent outside edges of the front plate 102. In another embodiment (not illustrated), to expand the area by which the display 101 is exposed, the gap between the periphery of the display 101 and the periphery of the front plate 102 may be formed to be substantially the same.

In another embodiment (not illustrated), recesses or openings may be formed in a screen display area of the display 101, and the electronic device 100 may include at least one of the audio module 114, the sensor module 104, the camera module 105, and the light emitting element 106 that are aligned with the recesses or the openings. In another embodiment (not illustrated), the electronic device 100 may include, on a rear surface of the screen display area of the display 101, at least one of the audio module 114, the sensor module 104, the camera module 105, the fingerprint sensor 116, and the light emitting element 106. In another embodiment (not illustrated), the display 101 may be coupled with, or disposed adjacent to, touch detection circuitry, a force sensor for measuring the intensity (force) of a touch, and/or a digitizer for detecting a stylus pen of a magnetic type. In some embodiments, at least a part of the sensor modules 104 and 119 may be disposed in the first areas 110D and/or the second areas 110E.

The audio modules 103, 107, and 114 may include the microphone hole 103 and the speaker holes 107 and 114. A microphone for obtaining a sound from the outside may be disposed in the microphone hole 103, and in some embodiments, a plurality of microphones may be disposed in the microphone hole 103 to sense the direction of a sound. The speaker holes 107 and 114 may include the external speaker hole 107 and the receiver hole 114 for a telephone call. In some embodiments, the speaker holes 107 and 114 and the microphone hole 103 may be implemented with one hole, and a speaker (e.g., a piezoelectric speaker) may be included without the speaker holes 107 and 114.

The sensor modules 104, 116, and 119 may generate an electrical signal or a data value that corresponds to an operational state inside the electronic device 100 or an environmental state external to the electronic device 100. The sensor modules 104, 116, and 119 may include, for example, the first sensor module 104 (e.g., a proximity sensor) and/or the second sensor module (not illustrated) (e.g., a fingerprint sensor) that is disposed on the first surface 110A of the housing 110, and/or the third sensor module 119 (e.g., an HRM sensor) and/or the fourth sensor module 116 (e.g., a fingerprint sensor) that is disposed on the second surface 110B of the housing 110. The fingerprint sensor may be disposed not only on the first surface 110A of the housing 110 (e.g., the display 101) but also on the second surface 110B. The electronic device 100 may further include a non-illustrated sensor module, which may be, for example, at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or the illuminance sensor 104.

The camera modules 105, 112, and 113 may include the first camera device or camera module 105 disposed on the first surface 110A of the electronic device 100, and the second camera device 112 and/or the flash 113 disposed on the second surface 110B. The camera modules 105 and 112 may include one or more lenses, an image sensor, and/or an image signal processor. The flash 113 may include, for example, a light emitting diode or a xenon lamp. In some embodiments, two or more lenses (an IR camera lens, a wide angle lens, and a telephoto lens) and image sensors may be disposed on one surface of the electronic device 100.

The light emitting element 106 may be disposed on, for example, the first surface 110A of the housing 110. For example, the light emitting element 106 may provide state information of the electronic device 100 in the form of light. In another embodiment, the light emitting element 106 may provide, for example, a light source that operates in conjunction with the camera module 105. The light emitting element 106 may include, for example, an LED, an IR LED, and a xenon lamp.

The connector holes 108 and 109 may include the first connector hole 108 in which a connector (e.g., a USB connector) for transmitting and receiving power and/or data with an external electronic device is received, and/or the second connector hole 109 (e.g., an earphone jack) in which a connector for transmitting and receiving audio signals with an external electronic device is received.

Referring to FIG. 3, an electronic device 300 may include a side bezel structure 310, a first support member 311 (e.g., a bracket), a front plate 320, a display 330, a printed circuit board 340, a battery 350, a second support member 360 (e.g., a rear case), an antenna 370, and a back plate 380. In some embodiments, the electronic device 300 may omit at least one component (e.g., the first support member 311 or the second support member 360) among the aforementioned components, or may additionally include other component(s). At least one of the components of the electronic device 300 may be the same as, or similar to, at least one of the components of the electronic device 100 of FIG. 1 or 2, and repetitive descriptions will hereinafter be omitted.

The first support member 311 may be disposed inside the electronic device 300 and may be connected with the side bezel structure 310, or may be integrally formed with the side bezel structure 310. The first support member 311 may be formed of, for example, a metallic material and/or a nonmetallic (e.g., polymer) material. The first support member 311 may have one surface to which the display 330 is coupled and an opposite surface to which the printed circuit board 340 is coupled. A processor, a memory, and/or an interface may be mounted on the printed circuit board 340. At least part of the printed circuit board 340 may be flexible. The processor may include, for example, one or more of a central processing unit, an application processor, a graphic processing unit, an image signal processor, a sensor hub processor, or a communication processor.

The memory may include, for example, a volatile memory or a nonvolatile memory.

The interface may include, for example, a high definition multimedia interface (HDMI), a universal serial bus (USB) interface, a secure digital (SD) card interface, and/or an audio interface. The interface, for example, may electrically or physically connect the electronic device 300 with an external electronic device and may include a USB connector, an SD card/ multimedia card (MMC) connector, or an audio connector.

The battery 350, which is a device for supplying power to at least one component of the electronic device 300, may include, for example, a primary cell that is not rechargeable, a secondary cell that is rechargeable, or a fuel cell. For example, at least part of the battery 350 may be disposed on substantially the same plane as the printed circuit board 340. The battery 350 may be integrally disposed inside the electronic device 300, or may be disposed so as to be detachable from the electronic device 300.

The antenna 370 may be disposed between the back plate 380 and the battery 350. The antenna 370 may include, for example, a near field communication (NFC) antenna, a wireless charging antenna, and/or a magnetic secure transmission (MST) antenna. For example, the antenna 370 may perform short range communication with an external device, or may wirelessly transmit and receive power required for charging. In another embodiment, an antenna structure may be formed by the side bezel structure 310 and/or part of the first support member 311, or a combination thereof.

Referring to FIG. 4, in the illustrated embodiment, an electronic device may include a side bezel structure 410, a front plate 420, a display 430, a back plate 480, and a force sensor 490. FIG. 4 is a view in which a rear surface of the electronic device is illustrated as facing the upper direction.

The back plate 480 may include a curved portion 481 extending to a lateral surface portion of the electronic device. In other words, the back plate 480 may include the curved portion 481 curvedly extending toward the front plate 420. In this specification, the surface formed between the back plate 480 and the front plate 420 may be referred to as the lateral surface portion of the electronic device.

The side bezel structure 410 may not only form part of a side surface of the electronic device, but may also form a skeleton of the electronic device. That is, the side bezel structure 410 may be integrally formed with not only a structure that forms the side surface of the electronic device but also a support member that forms the skeleton of the electronic device. Furthermore, the side bezel structure 410 may be integrally formed with a sensing assistance structure 411. The sensing assistance structure 411 may have a shape protruding from the support member of the side bezel structure 410 toward the back plate 480. The sensing assistance structure 411 may have a curved surface facing the curved portion 481 of the back plate 480. Another surface of the sensing assistance structure 411 may be a flat surface. The flat surface of the sensing assistance structure 411 may be perpendicular to the support member of the side bezel structure 410. The curvature of the curved surface of the sensing assistance structure 411 may be the same as, or similar to, the curvature of the curved portion 481.

The electronic device may include a printed circuit board 440 between the back plate 480 and the side bezel structure 410. At least part of the printed circuit board 440 may be flexible.

The force sensor 490 may be formed on the printed circuit board 440 of the electronic device. The force sensor 490 may include a first electrode 491 and a second electrode 492. The first electrode 491 and the second electrode 492 may be formed on the flexible part of the printed circuit board 440 and may be disposed to face each other. A spacer 493 may be located between the first electrode 491 and the second electrode 492. The force sensor 490 of the electronic device may measure the intensity (force) of a touch. The force sensor 490 may be located to face one surface of the sensing assistance structure 411. According to an embodiment, the force sensor 490 may be located to face the flat portion of the sensing assistance structure 411. That is, the force sensor 490 may be located such that the sensing assistance structure 411 is located between the force sensor 490 and the curved portion 481.

A surface of the force sensor 490 that faces the one surface of the sensing assistance structure 411 may be a force sensing surface. A user's touch (force) on the curved portion 481 may be transmitted to the force sensing surface of the force sensor 490 through the sensing assistance structure 411. The force sensor 490 may sense the force transmitted to the force sensing surface and may measure the intensity (force) of the user's touch.

Preset (default) capacitance may be formed between the first electrode 491 and the second electrode 492. A processor of the electronic device may periodically measure the default capacitance. When the user presses the curved portion 481 of the back plate 480, a force may be transmitted to the force sensor 490 through the sensing assistance structure 411, and a change in the capacitance (or the electric field between the electrodes) may be generated between the first electrode 491 and the second electrode 492. The processor may identify the user's touch on the curved portion 481 by detecting a change of the first electrode 491 and the second electrode 492.

In FIG. 4, the first electrode 491 and the second electrode 492 are illustrated as being formed on the printed circuit board 440. However, according to an embodiment, the first electrode 491 and the second electrode 492 may be formed on separate printed circuit boards, or may be formed on opposite sides of a single printed circuit board, respectively. One of the first electrode 491 or the second electrode 492 may be connected to a common ground inside the electronic device.

One or more of a strain gauge, a piezoelectric element, a force sensitive resistor (FSR) sensor, or an inductive sensor may be used as the force sensor 490. However, the force sensor 490 is not limited thereto, and any sensor capable of measuring the intensity (force) of a touch may be used as the force sensor 490.

The electronic device may include a waterproof member 495. The waterproof member 495 may be located between the curved portion 481 and the sensing assistance structure 411. The waterproof member 495 may cover at least part of the curved surface of the sensing assistance structure 411. The waterproof member 495 may be brought into close contact with the curved portion 481 and the sensing assistance structure 411. The waterproof member 495 may have a shape bent along the curved surface of the sensing assistance structure 411. The position and the shape of the waterproof member 495 are not limited to those illustrated in FIG. 4, and the waterproof member 495 may be located in a gap that requires waterproofing. Furthermore, in an embodiment, the waterproof member 495 may be omitted.

In FIG. 4, the back plate 480 is illustrated as including the curved portion 481 extending to the lateral surface portion of the electronic device. However, according to an embodiment, the front plate 420 rather than the back plate 480 may include a curved portion extending to the lateral surface portion of the electronic device.

The sensing assistance structure 411 may fill an empty space between the force sensor 490, which has a flat shape, and the curved portion 481 to allow the user's force to be transmitted to the force sensor 490. That is, the sensing assistance structure 411 may improve sensing efficiency of the force sensor 490 by transmitting the user's force to the force sensor 490. Further, the sensing assistance structure 411 may support the curved portion 481 to allow the curved portion 481 to maintain the curved shape thereof. Furthermore, by allowing the curved portion 481 to maintain the curved shape, the sensing assistance structure 411 may provide, to the user, a sensing area protruding in a curved shape and may allow the user to easily identify the position of the sensing area. Moreover, by allowing the force sensor 490 to maintain the flat shape, the sensing assistance structure 411 may improve efficiency in sensing, by the force sensor 490, a user input. That is, due to the sensing assistance structure 411, the force sensor 490 having a flat shape rather than a curved shape may be mounted in the electronic device. In this case, ease of manufacture of the force sensor 490, ease of mounting the force sensor 490, and an improvement in sensing efficiency may be achieved, as compared with when a force sensor having a curved shape is mounted. Also, by curvedly extending the front plate 420 or the back plate 480 to the lateral surface portion of the electronic device and reducing the side bezel structure 410, the electronic device may have improved aesthetics. In addition, the electronic device may provide the sensing area to the user through the curved portion 481. Accordingly, a physical button may be omitted, and thus the electronic device may have improved aesthetics.

Hereinafter, an operation of the electronic device according to the embodiment will be described with reference to FIGS. 4 to 7.

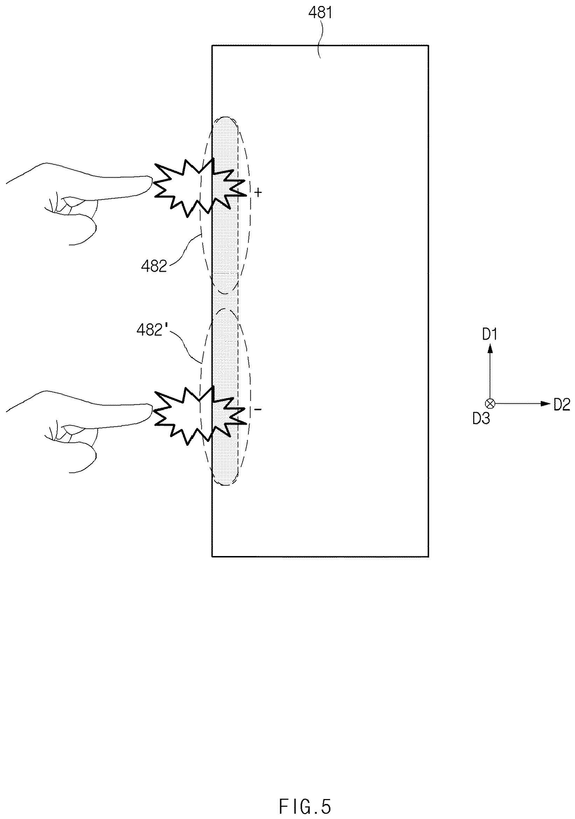

FIG. 5 is an enlarged view illustrating the curved portion of the back plate of the electronic device of FIG. 4 according to an embodiment of the disclosure.

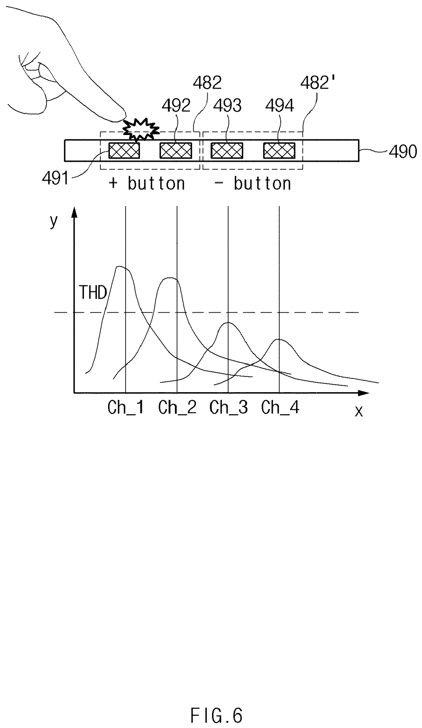

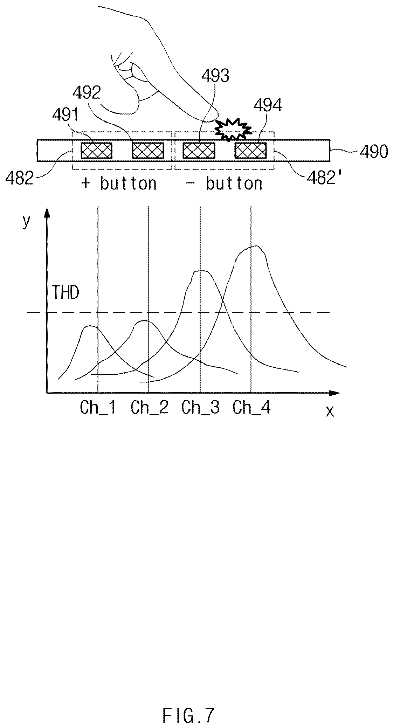

FIGS. 6 and 7 illustrate graphs depicting magnitudes of signals generated by the force sensor when the user touches the curved portion of FIG. 4 according to various embodiments of the disclosure.

Referring to FIGS. 4 and 5, areas of the curved portion 481 of the back plate 480 of the electronic device where the user's force (the intensity of a touch) is able to be detected (through the force sensor 490) are referred to as sensing areas 482 and 482'. That is, when there is the user's force (the intensity of a touch) on the sensing areas 482 and 482' of the curved portion 481 of the back plate 480 of the electronic device, the user's force may be transmitted to the force sensor 490, and the force sensor 490 may sense the user's force. Even when the force sensor 490 is not in contact with the curved portion 481 as illustrated in FIG. 4, the force may be transmitted through the sensing assistance structure 411, and the force sensor 490 may sense the user's force on the curved portion 481. The sensing areas 482 and 482' may correspond to the area where the force sensor 490 is located. The sensing areas 482 and 482' may refer to specific areas of the curved portion 481 where the user's force (the intensity of a touch) is able to be detected, rather than separate components included in the curved portion 481.

Referring to FIGS. 6 and 7, the x-axes in the graphs of FIGS. 6 and 7 represent the position where the user touches the force sensor 490. The y-axes in the graphs of FIGS. 6 and 7 represent the magnitude of a signal generated by the force sensor 490. The y-axes in the graphs of FIGS. 6 and 7 may mean the magnitude of force, voltage, or electric current. The force sensor 490 may include four sensing channels 491, 492, 493, and 494. Each of the sensing channels 491, 492, 493, and 494 may sense an input of the user and may generate a signal. That is, each of the sensing channels 491, 492, 493, and 494 may be a unit of an area for sensing an input of the user.

Among the four sensing channels 491, 492, 493, and 494 included in the force sensor 490, the first sensing channel 491 and the second sensing channel 492 may be assigned as a plus (+) button, and the third sensing channel 493 and the fourth sensing channel 494 may be assigned as a minus (-) button. The sensing area corresponding to the portion of the force sensor 490 that is assigned as the plus (+) button may be the first sensing area 482. The sensing area corresponding to the portion of the force sensor 490 that is assigned as the minus (-) button may be the second sensing area 482'. The number of sensing channels included in the force sensor 490 and the number of sensing channels assigned to each button is merely exemplary and are not limited to embodiment illustrated in FIGS. 6 and 7.

Referring to FIGS. 5 and 6, when the user touches (presses) the first sensing area 482, the force sensor 490 may sense the user's touch and may generate a signal corresponding to the intensity (force) of the user's touch as in the graph of FIG. 6. The signal may be transferred to a processor (not illustrated) that is connected with the force sensor 490, and the processor may identify a signal having a magnitude greater than or equal to a threshold value (THD). That is, the processor may identify signals that have a magnitude greater than or equal to the threshold value THD and that are generated from the first sensing channel 491 and the second sensing channel 492. The processor may determine that a user input is input to the plus (+) button that is assigned to the first sensing channel 491 and the second sensing channel 492 and may perform an operation corresponding to the plus (+) button. The processor may turn up the volume of audio of the electronic device as an example of the operation corresponding to the plus (+) button. However, this is merely illustrative, and the operation corresponding to the plus (+) button is not limited to the volume control.

Referring to FIGS. 5 and 7, when the user touches the second sensing area 482', the force sensor 490 may sense the user's touch and may generate a signal corresponding to the intensity (force) of the user's touch as in the graph of FIG. 7. The signal may be transferred to the processor (not illustrated) that is connected with the force sensor 490, and the processor may identify a signal having a magnitude greater than or equal to the threshold value THD. That is, the processor may identify signals that have a magnitude greater than or equal to the threshold value THD and that are generated from the third sensing channel 493 and the fourth sensing channel 494. The processor may determine that a user input is input to the minus (-) button that is assigned to the third sensing channel 493 and the fourth sensing channel 494 and may perform an operation corresponding to the minus (-) button. The processor may turn down the volume of audio of the electronic device as an example of the operation corresponding to the minus (-) button. However, this is merely illustrative, and the operation corresponding to the minus (-) button is not limited to the volume control.

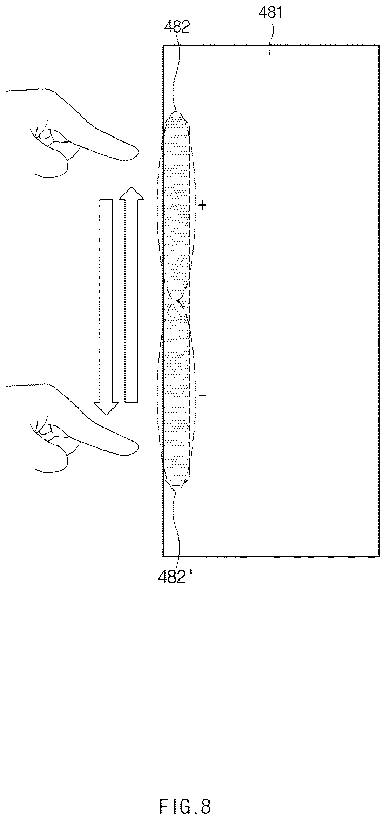

Hereinafter, an operation of the electronic device according to the embodiment will be described with reference to FIGS. 8 to 9. Descriptions of components identical to those in the above-described embodiments will be omitted.

FIG. 8 is an enlarged view illustrating the curved portion of the back plate of the electronic device of FIG. 4 according to an embodiment of the disclosure.

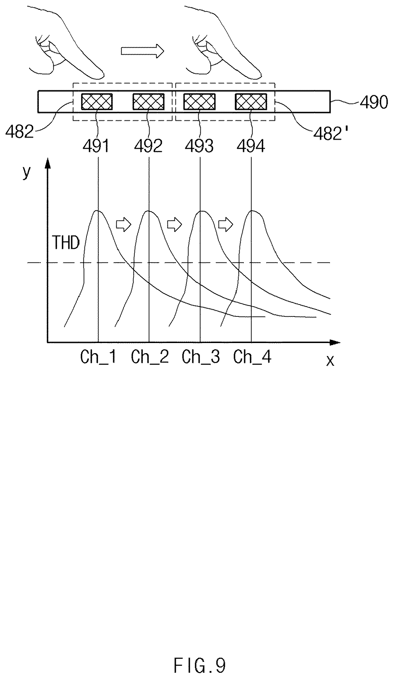

FIG. 9 illustrates a graph depicting magnitude of a signal generated by the force sensor when the user touches the curved portion of FIG. 4 according to an embodiment of the disclosure.

Referring to FIGS. 8 and 9, when the user touches the sensing areas 482 and 482', the force sensor 490 may sense the user's touch and may sequentially generate a signal corresponding to the intensity (force) of the user's touch as in the graph of FIG. 9. The signal may be transferred to the processor (not illustrated) that is connected with the force sensor 490, and the processor may identify a signal having a magnitude greater than or equal to the threshold value THD. When the position where the signal having a magnitude greater than or equal to the threshold value THD is generated is sequentially moved as in the graph of FIG. 9, the processor may identify that the user's finger slides along the sensing areas 482 and 482'. That is, the processor may determine that there is a slide input of the user from the first sensing area 482 to the second sensing area 482' and may perform an operation corresponding thereto. The processor may turn down the volume of audio of the electronic device as an example of the operation corresponding to the slide input from the first sensing area 482 to the second sensing area 482'. Alternatively, the processor may decrease the brightness of a screen of the electronic device as an example of the operation corresponding to the slide input from the first sensing area 482 to the second sensing area 482'. In another case, the processor may perform an operation of turning on or off the electronic device as an example of the operation corresponding to the slide input from the first sensing area 482 to the second sensing area 482'. However, these are merely illustrative, and the operation corresponding to the slide input is not limited thereto.

Likewise, when determining that there is a slide input of the user from the second sensing area 482' to the first sensing area 482, the processor may perform an operation corresponding thereto. For example, in response to the slide input from the second sensing area 482' to the first sensing area 482, the processor may turn up the volume of audio output by the electronic device. In another example, in response to the slide input from the second sensing area 482' to the first sensing area 482, the processor may increase the brightness of a screen output by the electronic device. In another example, in response to the slide input from the second sensing area 482' to the first sensing area 482, the processor may perform an operation of turning on or off the electronic device. However, these are merely illustrative, and the operation corresponding to the slide input is not limited thereto.

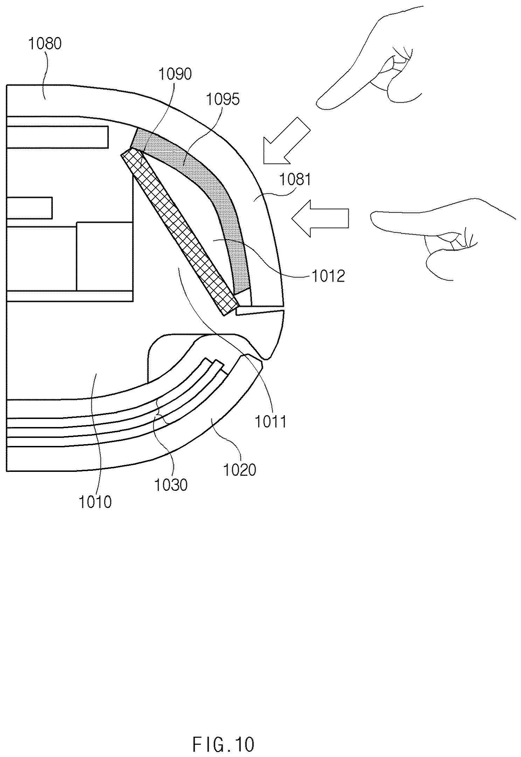

Hereinafter, a structure of an electronic device according to an embodiment will be described with reference to FIG. 10.

FIG. 10 is a sectional view of the electronic device according to an embodiment of the disclosure. Descriptions of components identical to those in the above-described embodiments will be omitted.

Referring to FIG. 10, in the illustrated embodiment, the electronic device may include a side bezel structure 1010, a front plate 1020, a display 1030, a first sensing assistance structure 1012 having a curved surface, a back plate 1080, and a force sensor 1090.

The back plate 1080 may include a curved portion 1081 extending to a lateral surface portion of the electronic device. In other words, the back plate 1080 may include the curved portion 1081 curvedly extending toward the front plate 1020.

The first sensing assistance structure 1012 having the curved surface may be located to face the curved portion 1081 with a waterproof member 1095 there between. A surface of the first sensing assistance structure 1012 that faces the curved portion 1081 of the back plate 1080 may be a curved surface. Another surface of the first sensing assistance structure 1012 may be a flat surface. The flat surface of the first sensing assistance structure 1012 may have a predetermined slope with respect to a support member of the side bezel structure 1010 that forms the skeleton of the electronic device. The curvature of the curved surface of the first sensing assistance structure 1012 may be the same as, or similar to, the curvature of the curved portion 1081.

The side bezel structure 1010 may be integrally formed with a second sensing assistance structure 1011. The second sensing assistance structure 1011 may have a shape that protrudes toward the back plate 1080 from the support member of the side bezel structure 1010 that forms the skeleton of the electronic device. A surface of the second sensing assistance structure 1011 that faces the curved portion 1081 of the back plate 1080 may be a flat surface having a predetermined slope with respect to the support member of the side bezel structure 1010. That is, a surface of the second sensing assistance structure 1011 that faces the first sensing assistance structure 1012 may be a flat surface.

The force sensor 1090 may be located between the second sensing assistance structure 1011 and the first sensing assistance structure 1012. The force sensor 1090 may be located on the flat surface of the second sensing assistance structure 1011.

The waterproof member 1095 may be located between the curved portion 1081 and the first sensing assistance structure 1012. The waterproof member 1095 may cover at least part of the curved surface of the first sensing assistance structure 1012. The waterproof member 1095 may have a shape bent along the curved surface of the first sensing assistance structure 1012. The position and the shape of the waterproof member 1095 are not limited to those illustrated in FIG. 10, and the waterproof member 1095 may be located in a gap that requires waterproofing. Furthermore, in an embodiment, the waterproof member 1095 may be omitted.

The first sensing assistance structure 1012 may fill an empty space between the force sensor 1090, which has a flat shape, and the curved portion 1081 to allow a user's force to be transmitted to the force sensor 1090. The first sensing assistance structure 1012 may be referred to as the force transmission structure. That is, the first sensing assistance structure 1012 may improve sensing efficiency of the force sensor 1090 by transmitting the user's force to the force sensor 1090. Further, the first sensing assistance structure 1012 may support the curved portion 1081 to allow the curved portion 1081 to maintain the curved shape thereof. Furthermore, by allowing the curved portion 1081 to maintain the curved shape, the first sensing assistance structure 1012 may provide, to the user, a sensing area protruding in a curved shape and may allow the user to easily identify the position of the sensing area.

The second sensing assistance structure 1011 may support the force sensor 1090 such that the force sensor 1090 is forced, thereby improving efficiency in sensing, by the force sensor 1090, a user input. The second sensing assistance structure 1011 may be referred to as the sensor support structure. Furthermore, by allowing the force sensor 1090 to maintain the flat shape, the second sensing assistance structure 1011 may improve efficiency in sensing, by the force sensor 1090, a user input.

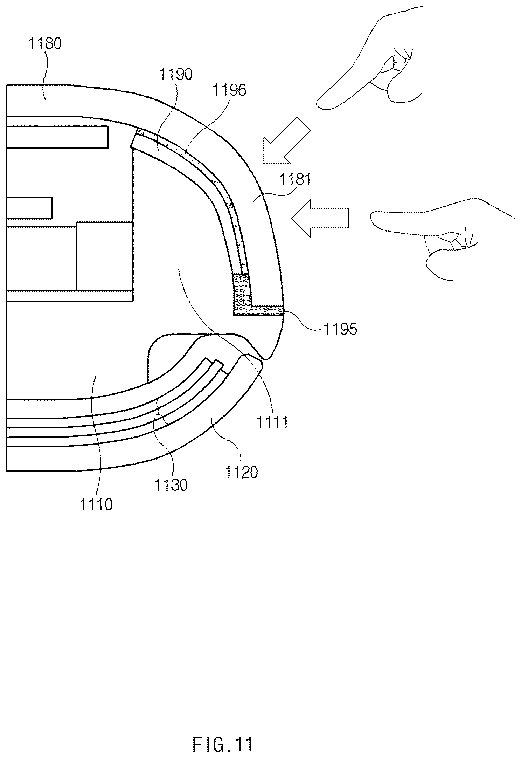

Hereinafter, a structure of an electronic device according to an embodiment will be described with reference to FIG. 11.

FIG. 11 is a sectional view of the electronic device according to an embodiment of the disclosure. Descriptions of components identical to those in the above-described embodiments will be omitted.

Referring to FIG. 11, in the illustrated embodiment, the electronic device may include a side bezel structure 1110, a front plate 1120, a display 1130, a back plate 1180, and a force sensor 1190.

The back plate 1180 may include a curved portion 1181 curvedly extending toward the front plate 1120.

The side bezel structure 1110 may be integrally formed with a support member that forms the skeleton of the electronic device and a sensor support structure 1111. The sensor support structure 1111 may have a shape protruding from the support member of the side bezel structure 1110 toward the back plate 1180. A surface of the sensor support structure 1111 that faces the curved portion 1181 of the back plate 1180 may be a curved surface, and another surface of the sensor support structure 1111 may be a flat surface. The flat surface of the sensor support structure 1111 may be perpendicular to the support member of the side bezel structure 1110.

The force sensor 1190 may have a shape bent along the curved portion 1181 and may be located between the sensor support structure 1111 and the curved portion 1181. The force sensor 1190 may have a film form and may be attached to the curved portion 1181 by an adhesive 1196.

The waterproof member 1195 may be located in a gap between the curved portion 1181 and the side bezel structure 1110. The waterproof member 1195 may cover one surface of the force sensor 1190. The position and the shape of the waterproof member 1195 are not limited to those illustrated in FIG. 11, and the waterproof member 1195 may be located in a gap that requires waterproofing. Furthermore, in an embodiment, the waterproof member 1195 may be omitted.

The sensor support structure 1111 may support the force sensor 1190 such that the force sensor 1190 is forced, thereby improving efficiency in sensing, by the force sensor 1190, a user input. Further, by allowing the force sensor 1190 to maintain the curved shape, the sensor support structure 1111 may increase the area by which the force sensor 1190 makes direct contact with the curved portion 1181 or makes indirect contact with the curved portion 1181 with the adhesive 1196 there between, thereby improving efficiency in sensing, by the force sensor 1190, a user input. Furthermore, the sensor support structure 1111 may support the force sensor 1190 and/or the curved portion 1181 to allow the force sensor 1190 and/or the curved portion 1181 to maintain the curved shape thereof. In addition, by allowing the force sensor 1190 and/or the curved portion 1181 to maintain the curved shape, the sensor support structure 1111 may provide, to the user, a sensing area protruding in a curved shape and may allow the user to easily identify the position of the sensing area.

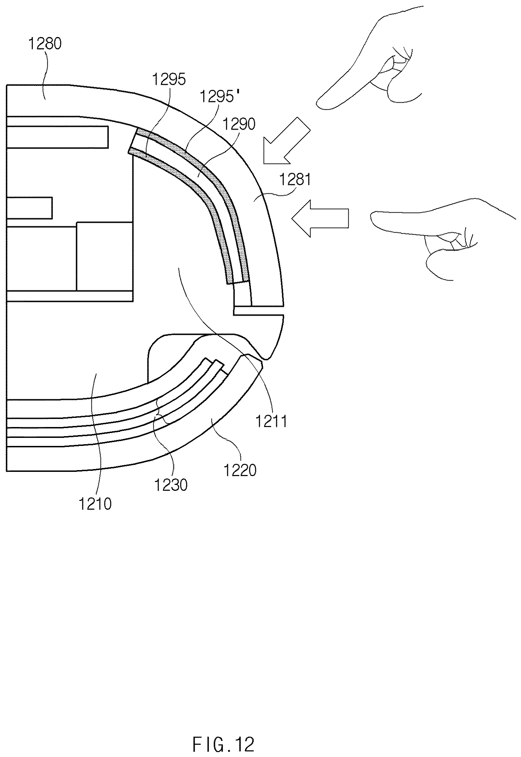

Hereinafter, a structure of an electronic device according to an embodiment will be described with reference to FIG. 12.

FIG. 12 is a sectional view of the electronic device according to an embodiment of the disclosure. Descriptions of components identical to those in the above-described embodiments will be omitted.

Referring to FIG. 12, in the illustrated embodiment, the electronic device may include a side bezel structure 1210, a front plate 1220, a display 1230, a back plate 1280, and a force sensor 1290.

The back plate 1280 may include a curved portion 1281 curvedly extending toward the front plate 1220.

The side bezel structure 1210 may include a sensor support structure 1211 having a shape protruding toward the back plate 1280 of the electronic device. A surface of the sensor support structure 1211 that faces the curved portion 1281 of the back plate 1280 may be a curved surface, and another surface of the sensor support structure 1211 may be a flat surface.

The force sensor 1290 may have a shape bent along the curved portion 1281 and may be located between the sensor support structure 1211 and the curved portion 1281. The force sensor 1290 may have a film form.

A first waterproof member 1295 may have a shape bent along the curved surface of the sensor support structure 1211 and may be located between the sensor support structure 1211 and the force sensor 1290. The first waterproof member 1295 may cover one surface of the force sensor 1290. A second waterproof member 1295' may have a shape bent along the curved surface of the curved portion 1281 and may be located between the force sensor 1290 and the curved portion 1281. The second waterproof member 1295' may cover another surface of the force sensor 1290.

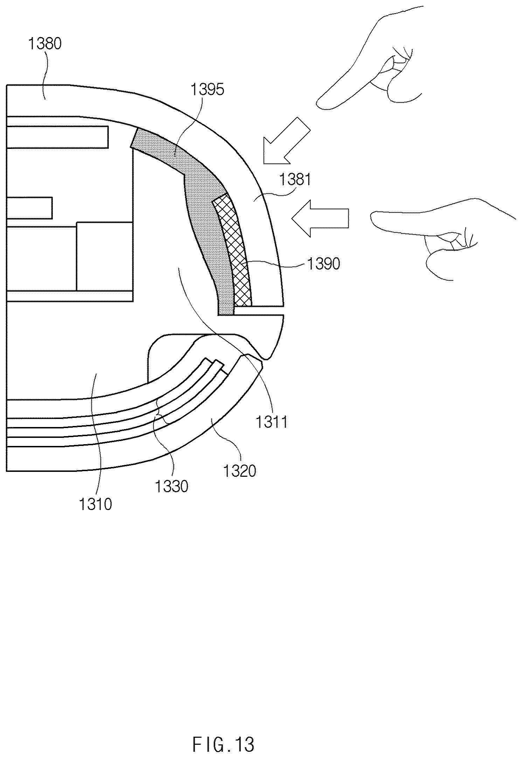

Hereinafter, a structure of an electronic device according to an embodiment will be described with reference to FIG. 13.

FIG. 13 is a sectional view of the electronic device according to an embodiment of the disclosure. Descriptions of components identical to those in the above-described embodiments will be omitted.

Referring to FIG. 13, in the illustrated embodiment, the electronic device may include a side bezel structure 1310, a front plate 1320, a display 1330, a back plate 1380, and a force sensor 1390.

The back plate 1380 may include a curved portion 1381 curvedly extending toward the front plate 1320.

The side bezel structure 1310 may include a sensor support structure 1311 having a shape protruding toward the back plate 1380 of the electronic device.

The force sensor 1390 may be located between the sensor support structure 1311 and the curved portion 1381. The force sensor 1390 may make contact with the curved portion 1381.

A waterproof member 1395 may be located to fill a gap between the sensor support structure 1311 and the force sensor 1390. The waterproof member 1395 may cover at least one surface of the force sensor 1390. The waterproof member 1395 may be located between the sensor support structure 1311 and the curved portion 1381 to fill a gap in which the force sensor 1390 is not located.

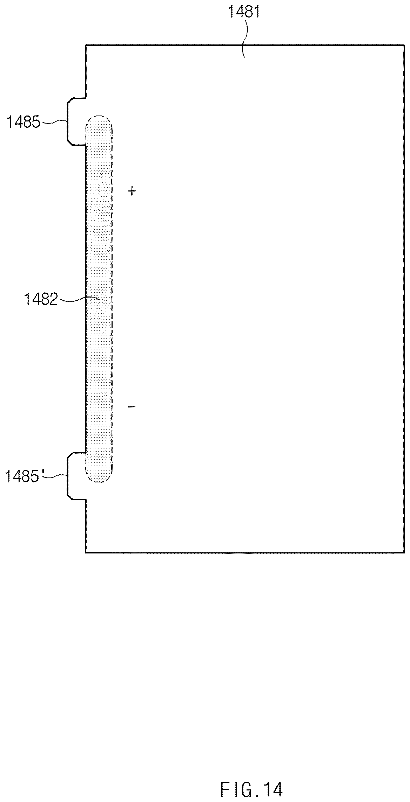

Hereinafter, an electronic device according to an embodiment will be described with reference to FIG. 14.

FIG. 14 is an enlarged view illustrating a curved portion of a back plate of the electronic device according to an embodiment of the disclosure. Descriptions of components identical to those in the above-described embodiments will be omitted.

The curved portion 1481 of the back plate of the electronic device may include, at the boundary of a sensing area 1482, a first protrusion 1485 and a second protrusion 1485' to enable a user to detect the sensing area 1482. As described above, the sensing area 1482 may not refer to a separate component included in the curved portion 1481, but may refer to a specific area of the curved portion 1481 where a force sensor is able to sense the user's force (the intensity of a touch).

Alternatively, the curved portion 1481 may include the first protrusion 1485 in an area corresponding to a plus (+) button and the second protrusion 1485' in an area corresponding to a minus (-) button. The number of protrusions is not limited to that illustrated in FIG. 14.

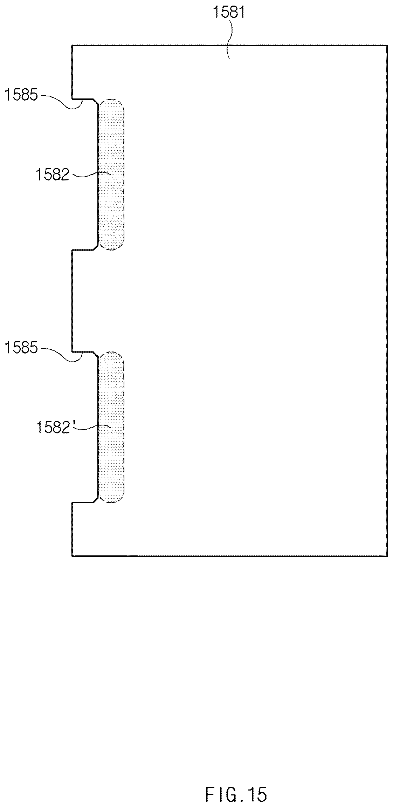

Hereinafter, an electronic device according to an embodiment will be described with reference to FIG. 15.

FIG. 15 is an enlarged view illustrating a curved portion of a back plate of the electronic device according to an embodiment of the disclosure. Descriptions of components identical to those in the above-described embodiments will be omitted.

The curved portion 1581 of the back plate of the electronic device may include a first recess 1585 in a portion corresponding to a first sensing area 1582 and a second recess 1585' in a portion corresponding to a second sensing area 1582' to enable a user to detect key areas. The number of recesses is not limited to that illustrated in FIG. 15.

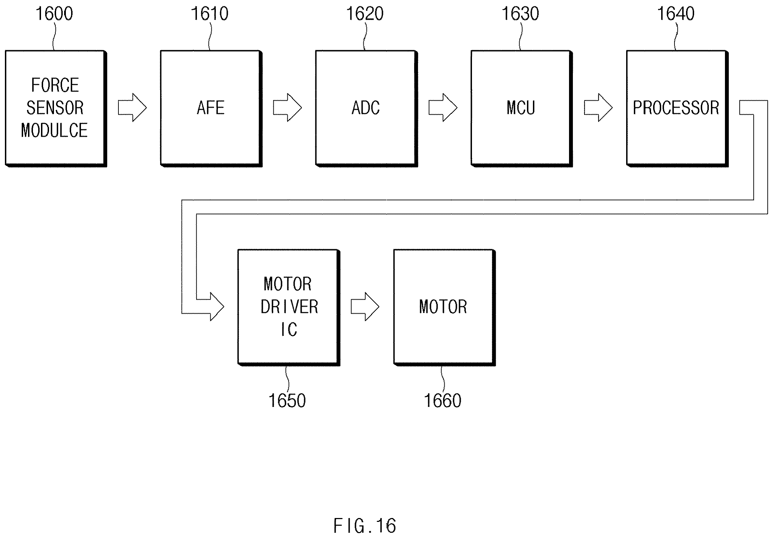

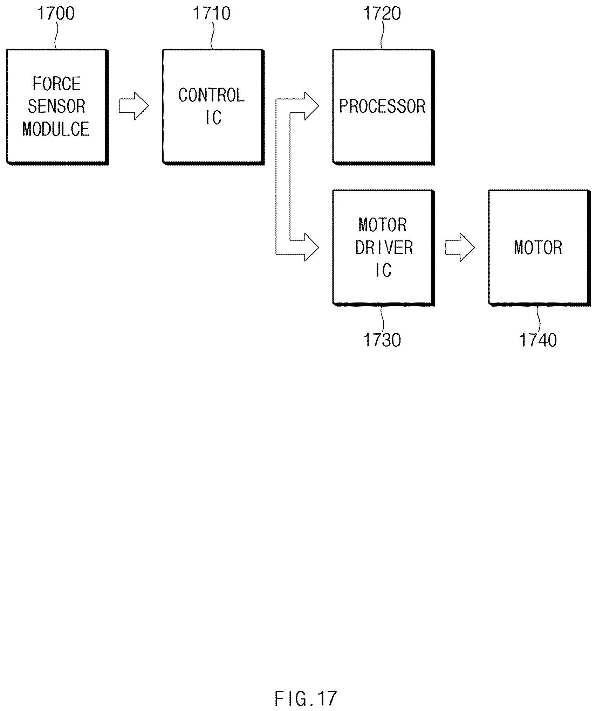

Hereinafter, circuit configurations of electronic devices according to embodiments will be described with reference to FIGS. 16 and 17.

FIG. 16 is a block diagram illustrating a circuit configuration of an electronic device according to an embodiment of the disclosure.

FIG. 17 is a block diagram illustrating a circuit configuration of an electronic device according to an embodiment of the disclosure.

Referring to FIG. 16, the electronic device according to the embodiment may determine that there is a user input through a force sensor module (e.g., a force sensor) 1600, analog front end (AFE) circuitry 1610, an analog-to-digital converter (ADC) 1620, a micro controller unit (MCU) 1630, and a processor 1640 in sequence. The force sensor module 1600 may serve as an input terminal of an external input (a user's touch). The AFE circuitry 1610 may interface the force sensor module 1600 and the processor 1640 to process an external analog signal into a digital signal in a system. The ADC 1620 may convert an analog input signal into a digital signal. The processor 1640 may provide vibration feedback corresponding to the user input, by controlling a motor 1660 through a motor driver IC 1650.

Referring to FIG. 17, the electronic device according to the other embodiment may determine that there is a user input through a force sensor module 1700, a control IC 1710, and a processor 1720 in sequence. The control IC 1710 may include analog front end (AFE) circuitry, an analog-to-digital converter (ADC), and a micro controller unit (MCU). The control IC 1710 may include a central processing unit (CPU) that controls the AFE circuitry, the ADC, and the MCU. Through the control IC 1710, the electronic device may reduce time taken to determine the user input. Furthermore, the electronic device may provide vibration feedback corresponding to the user input, by controlling a motor 1740 through a motor driver IC 1730 immediately after the force sensor module 1700 and the control IC 1710.

According to the embodiment of FIG. 16, the time interval between the user input and the vibration feedback may be 160 ms or more, and according to the embodiment of FIG. 17, the time interval between the user input and the vibration feedback may be 10 ms or less. Thus, according to the embodiment of FIG. 17, the time interval between the user input and the vibration feedback may be reduced.

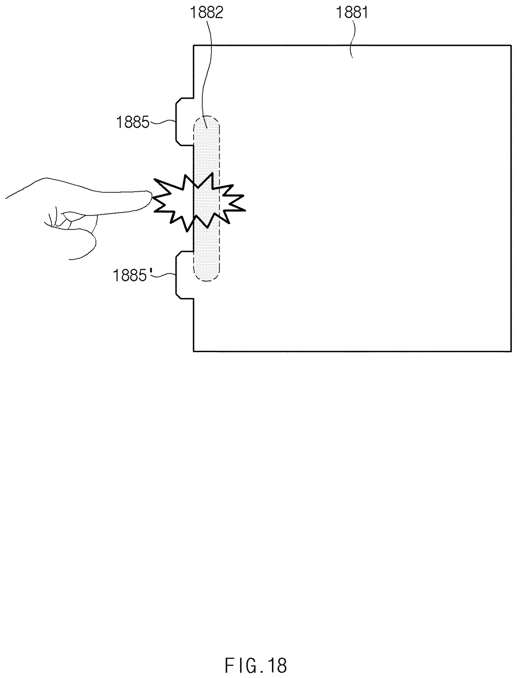

Hereinafter, a configuration and an operation of an electronic device according to an embodiment will be described with reference to FIG. 18.

FIG. 18 is a view illustrating a curved portion of a back plate of the electronic device according to the embodiment of the disclosure. Descriptions of components identical to those in the above-described embodiments will be omitted.

A sensing area 1882 of the curved portion 1881 of the back plate of the electronic device may be assigned as one button. In other words, a force sensor (not illustrated) that corresponds to the sensing area 1882 may be assigned as one button. The electronic device may execute a corresponding operation depending on whether the length by which a user touches the sensing area 1882 is short or long. For example, when the length by which the user touches the sensing area 1882 is short, the electronic device may activate a screen display area of a display (not illustrated). In another example, when the length by which the user touches the sensing area 1882 is long, the electronic device may perform an operation of turning on or off the electronic device. However, the operation depending on the length by which the user touches the sensing area 1882 is not limited thereto. Furthermore, when the force sensor (not illustrated) includes a plurality of sensing channels, the electronic device may detect an operation of sliding along the sensing area 1881 and may perform an operation corresponding to the sliding. That is, the electronic device may detect various types of inputs (a touch, a long touch, a slide, and the like) to the sensing area 1882 and may perform operations corresponding to the respective inputs.

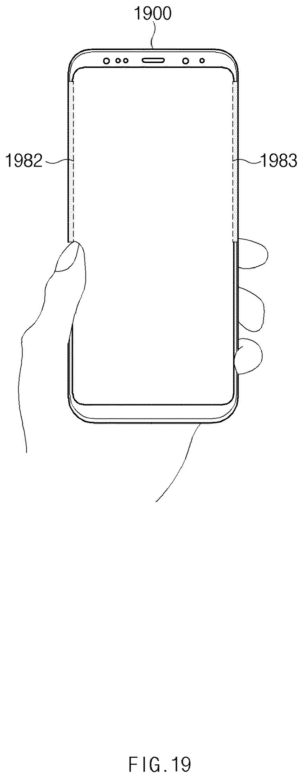

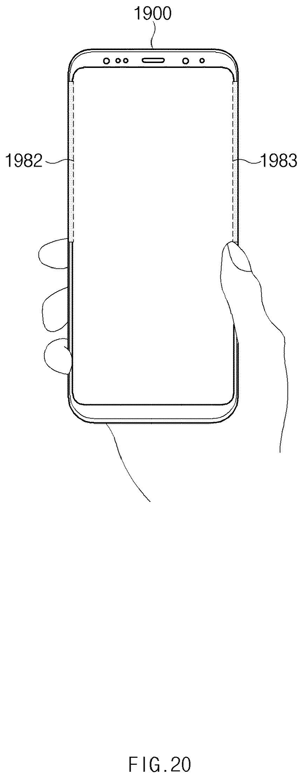

The curved portion 1881 of the back plate of the electronic device may include, at the boundary of the sensing area 1882, a plurality of protrusions 1885 and 1885'. The plurality of protrusions 1885 and 1885' may be located at the boundary of the sensing area 1882 and may allow the user to intuitively recognize the sensing area 1882. The shape of the plurality of protrusions 1885 and 1885' is not limited to that illustrated in FIG. 18. The plurality of protrusions 1885 and 1885' may be formed by intaglio, or may be omitted depending on embodiments. Hereinafter, a configuration and an operation of an electronic device according to an embodiment will be described with reference to FIGS. 19 and 20.

FIG. 19 is a view illustrating a case where a user holds the electronic device with the left hand according to an embodiment of the disclosure.

FIG. 20 is a view illustrating a case where the user holds the electronic device with the right hand according to an embodiment of the disclosure. Descriptions of components identical to those in the above-described embodiments will be omitted.

Referring to FIGS. 19 and 20, the electronic device 1900 may include a left sensing area 1982 on a left side surface and a right sensing area 1983 on a right side surface with respect to a front surface of the electronic device 1900. A curved portion of a second plate of the electronic device 1900 may include a left curved portion (not illustrated) and a right curved portion (not illustrated) with respect to the front surface of the electronic device 1900. The left sensing area 1982 may be located on the left curved portion (not illustrated), and the right sensing area 1983 may be located on the right curved portion (not illustrated).

In the interior of the electronic device 1900 that corresponds to the left sensing area 1982, a left force sensor (not illustrated) may be located between the left curved portion (not illustrated) and a left sensing assistance structure and/or sensor support structure (not illustrated). In the interior of the electronic device 1900 that corresponds to the right sensing area 1983, a right force sensor (not illustrated) may be located between the right curved portion (not illustrated) and a right sensing assistance structure and/or sensor support structure (not illustrated).

Assuming that the user wants to control the volume of audio of the electronic device 1900 while holding the electronic device 1900 with the left hand as illustrated in FIG. 19, it may be easier for the user to slide the thumb along the left sensing area 1982 of the electronic device 1900 than to slide the index finger along the right sensing area 1983 of the electronic device 1900. When the user slides the thumb along the left sensing area 1982, the electronic device 1900 may assign the left sensing area 1982 (or the left force sensor (not illustrated)) as a volume key. That is, the electronic device 1900 may identify the user's slide input in the left sensing area 1982 and may perform an operation of controlling the volume of audio of the electronic device 1900.

Likewise, assuming that the user wants to control the volume of audio of the electronic device 1900 while holding the electronic device 1900 with the right hand as illustrated in FIG. 20, it may be easier for the user to slide the thumb along the right sensing area 1983 of the electronic device 1900 than to slide the index finger along the left sensing area 1982 of the electronic device 1900. When the user slides the thumb along the right sensing area 1983, the electronic device 1900 may assign the right sensing area 1983 (or the right force sensor (not illustrated)) as a volume key. That is, the electronic device 1900 may identify the user's slide input in the right sensing area 1983 and may perform an operation of controlling the volume of audio of the electronic device 1900.

In other words, the electronic device 1900 may determine an operation to be performed, depending on the type of the user input (e.g., a touch, a long touch, a slide, or the like) irrespective of whether the user input occurs in the right sensing area 1983 or the left sensing area 1982. For example, when there is a slide input, the electronic device 1900 may determine to control the volume of audio of the electronic device 1900. In another example, when there is a long touch input, the electronic device 1900 may perform an operation of turning on or off the electronic device 1900. The electronic device 1900 may include both the left sensing area 1982 and the right sensing area 1983 and therefore may identify user inputs on the left side surface and the right side surface. Accordingly, when the user holds the electronic device 1900 with the left hand and when the user holds the electronic device 1900 with the right hand, the user may use a desired one of the right side surface and the left side surface of the electronic device 1900 as a desired key (e.g., a volume key, a power key, a camera activation key, a voice recognition agent call key, or the like) depending on user convenience.

Referring to FIG. 19, when the length by which the user touches the right sensing area 1983 is long, the electronic device 1900 may assign the right sensing area 1983 (or the right force sensor (not illustrated)) as a power key. That is, the electronic device 1900 may identify the user's long touch in the right sensing area 1983 and may perform an operation of turning on or off the electronic device 1900.

Referring to FIG. 20, when the length by which the user touches the left sensing area 1982 is long, the electronic device 1900 may assign the left sensing area 1982 (or the left force sensor (not illustrated)) as a power key. That is, the electronic device 1900 may identify the user's long touch in the left sensing area 1982 and may perform an operation of turning on or off the electronic device 1900.

Alternatively, the electronic device 1900 may control the volume of audio of the electronic device 1900 when there is a slide input on the left sensing area 1982 and may perform an operation of turning on or off the electronic device 1900 when there is a long touch input on the left sensing area 1982. In another case, the electronic device 1900 may control the volume of audio of the electronic device 1900 when there is a slide input on the right sensing area 1983 and may perform an operation of turning on or off the electronic device 1900 when there is a long touch input on the right sensing area 1983.

The type of the user input and the operation of the electronic device 1900 that corresponds to the type of the user input are not limited thereto. For example, when the user touches an upper portion of the left sensing area 1982 or an upper portion of the right sensing area 1983, the electronic device 1900 may perform an operation of turning up the volume of audio of the electronic device 1900. In another example, when the user touches a lower portion of the left sensing area 1982 or a lower portion of the right sensing area 1983, the electronic device 1900 may perform an operation of turning down the volume of audio of the electronic device 1900. In another example, when the user makes a light touch, the electronic device 1900 may perform an operation of activating a screen display area of a display of the electronic device 1900.

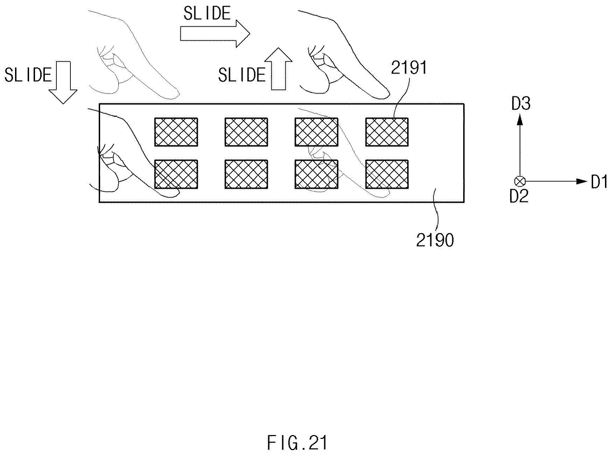

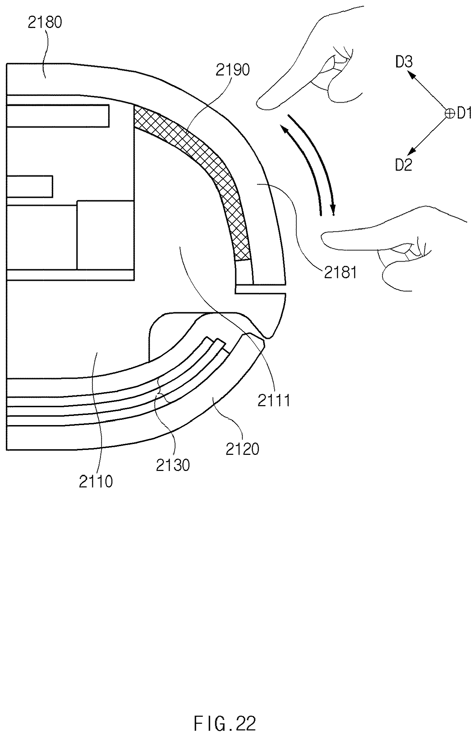

Hereinafter, a configuration and an operation of an electronic device according to an embodiment will be described with reference to FIGS. 21 and 22.

FIG. 21 is a view illustrating a force sensor of the electronic device according to an embodiment of the disclosure.

FIG. 22 is a view illustrating a section of the electronic device to which the force sensor of FIG. 21 is applied according to an embodiment of the disclosure. Descriptions of components identical to those in the above-described embodiments will be omitted. That is, reference elements 2110, 2111, 2120, 2130, 2180 and 2181 correspond to similar elements shown in other drawings, such as FIGS. 11-13.

The force sensor 2190 of the electronic device may include eight sensing channels 2191. The eight sensing channels 2191 may be arranged in a 2 x 4 array. The force sensor 2190 including the eight sensing channels 2191 may identify various user inputs (forces) such as a slide in a first direction D1, a slide in a direction opposite to the first direction D1, a slide in a third direction D3, a slide in a direction opposite to the third direction D3, a slide in the shape of "S", and the like. Furthermore, the electronic device may perform operations corresponding to the various user inputs that the force sensor 2190 is able to identify. That is, the electronic device may use one sensing area as keys (e.g., a power key, a volume key, a screen brightness control key, a camera activation key, a voice recognition agent call key, and the like) for performing various operations.

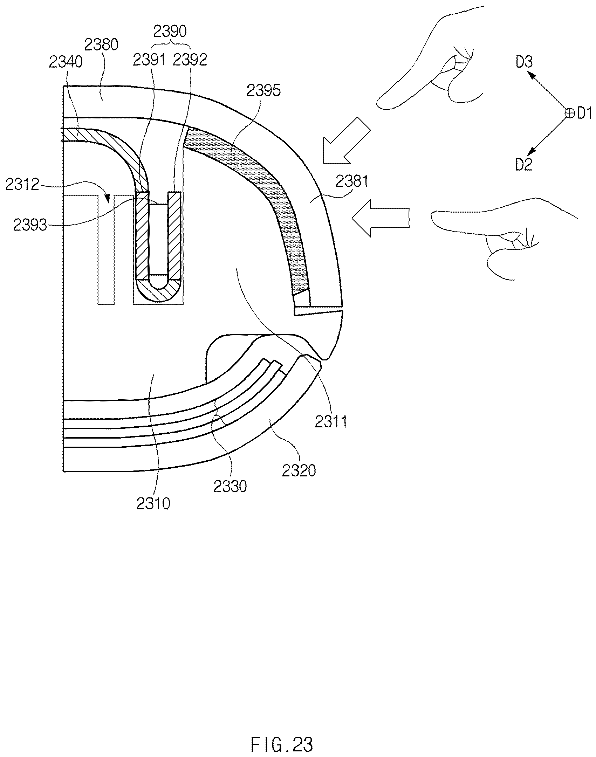

Hereinafter, a configuration of an electronic device according to an embodiment will be described with reference to FIG. 23.

FIG. 23 is a sectional view of the electronic device according to an embodiment of the disclosure. Descriptions of components identical to those in the above-described embodiments will be omitted.

Referring to FIG. 23, in the illustrated embodiment, the electronic device may include a side bezel structure 2310, a front plate 2320, a display 2330, a printed circuit board 2340, a sensing assistance structure 2311, a back plate 2380, a force sensor 2390, and a waterproof member 2395. The back plate 2380 may include a curved portion 2381, and the force sensor 2390 may include a first electrode 2391, a second electrode 2392, and a spacer 2393.

A support member of the side bezel structure 2310 that forms the skeleton of the electronic device may include a furrow 2312. The furrow 2312 may be located to correspond to the force sensor 2390 and may extend in a first direction D1. The furrow 2312 may be located to face the sensing assistance structure 2311 with the force sensor 2390 there between. That is, the force sensor 2390 may be located between the furrow 2312 and the sensing assistance structure 2311. The furrow 2312 may provide a space by which the force sensor 2390 is able to be pressed, thereby allowing the force sensor 2390 to be easily pressed by an external force. That is, the furrow 2312 may improve sensing efficiency of the force sensor 2390.

In FIG. 23, the furrow 2312 is illustrated as being located in the support member of the side bezel structure 2310. However, no special limitation applies to the position of the furrow 2312, as long as the furrow 2312 is located behind the force sensor 2390 with respect to a force sensing surface of the force sensor 2390 (e.g., a surface of the force sensor 2390 that faces the sensing assistance structure 2311). According to an embodiment, when the force sensor 2390 is located between the sensing assistance structure 2311 and the curved portion 2381, the furrow 2312 may be located in the sensing assistance structure 2311.

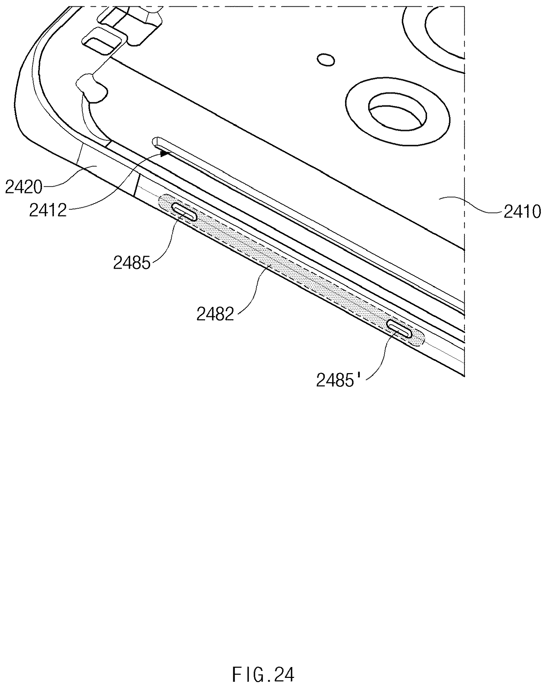

Hereinafter, a configuration of an electronic device according to an embodiment will be described with reference to FIG. 24.

FIG. 24 is a perspective view illustrating a rear side of the electronic device according to an embodiment of the disclosure. FIG. 24 may be a view illustrating the electronic device from which a back plate is removed. Descriptions of components identical to those in the above-described embodiments will be omitted.

Referring to FIG. 24, in the illustrated embodiment, the electronic device may include a side bezel structure 2410, a front plate 2420 extending to a side surface of the electronic device, and a force sensor (not illustrated).

In the interior of the electronic device, the force sensor (not illustrated) may be located at a position corresponding to a sensing area 2482 that is located on the portion of the front plate 2420 that extends to the side surface of the electronic device. The electronic device may include a first protrusion 2485 and a second protrusion 2485' in positions corresponding to the boundary of the sensing area 2482.

The side bezel structure 2410 may include a furrow 2412 in a position corresponding to the position in which the force sensor (not illustrated) is mounted. The furrow 2412 may extend straight in the same direction as the direction in which the force sensor (or the sensing area 2482) extends.

In FIG. 24, the front plate 2420 is illustrated as extending to the side surface of the electronic device. However, according to an embodiment, the back plate may extend to the side surface of the electronic device, and a sensing area may be located on the portion of the back plate that extends to the side surface of the electronic device.

According to the various embodiments of the disclosure, each of the electronic devices may implement a power button, a volume button, and the like on the side surface thereof without physical buttons and may have improved aesthetics. Further, according to the various embodiments of the disclosure, each of the electronic devices may include the sensing assistance structure and/or the sensor support structure that has a curved surface. Accordingly, the electronic device may help a user to detect the sensing area and may ease user inconvenience. Furthermore, according to the various embodiments of the disclosure, each of the electronic devices may include the protrusions or the recesses in the sensing area and may allow a user to intuitively recognize the sensing area, thereby easing user inconvenience. Moreover, according to the various embodiments of the disclosure, each of the electronic devices may reduce a circuit route along which operation response or vibration feedback is provided in response to a user input, thereby reducing response or feedback time. Also, according to the various embodiments of the disclosure, each of the electronic devices may include the sensing areas on both the left side surface and the right side surface thereof. Accordingly, the electronic device may detect a user input on a side surface desired by a user, irrespective of the direction of the hand with which the user holds the electronic device. In addition, according to the various embodiments of the disclosure, the force sensor of each of the electronic devices may include one or more sensing channels, and the electronic device may identify various user inputs through the sensing channels and may perform various operations through one sensing area.

According to the embodiments of the disclosure, the electronic devices may each identify a user's force inputs on side surfaces thereof and may provide, to the user, various functions corresponding to the force inputs.

According to the various embodiments of the disclosure, each of the electronic devices may implement a power button, a volume button, and the like on side surfaces thereof without physical buttons and may have improved aesthetics.

In addition, the disclosure may provide various effects that are directly or indirectly recognized.

Various embodiments of the disclosure and terms used herein are not intended to limit the technologies described in the disclosure to specific embodiments, and it should be understood that the embodiments and the terms include modification, equivalent, and/or alternative on the corresponding embodiments described herein. With regard to description of drawings, similar components may be marked by similar reference numerals. The terms of a singular form may include plural forms unless otherwise specified. In the disclosure disclosed herein, the expressions "A or B", "at least one of A and/or B", "A, B, or C", or "at least one of A, B, and/or C", and the like used herein may include any and all combinations of one or more of the associated listed items. Expressions such as "first," or "second," and the like, may express their components regardless of their priority or importance and may be used to distinguish one component from another component but is not limited to these components. When an (e.g., first) component is referred to as being "(operatively or communicatively) coupled with/to" or "connected to" another (e.g., second) component, it may be directly coupled with/to or connected to the other component or an intervening component (e.g., a third component) may be present.

According to the situation, the expression "adapted to or configured to" used herein may be interchangeably used as, for example, the expression "suitable for", "having the capacity to", "changed to", "made to", "capable of' or "designed to" in hardware or software. The expression "a device configured to" may mean that the device is "capable of' operating together with another device or other parts. For example, a "processor configured to (or set to) perform A, B, and C" may mean a dedicated processor (e.g., an embedded processor) for performing corresponding operations or a generic-purpose processor (e.g., a central processing unit (CPU) or an application processor (AP)) which performs corresponding operations by executing one or more software programs which are stored in a memory device.

The term "module" used herein may include a unit, which is implemented with hardware, software, or firmware, and may be interchangeably used with the terms "logic", "logical block", "part", "circuit", or the like. The "module" may be a minimum unit of an integrated part or a part thereof or may be a minimum unit for performing one or more functions or a part thereof. The "module" may be implemented mechanically or electronically and may include, for example, an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor, may cause the processor to perform a function corresponding to the instruction. The computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), an embedded memory, and the like. The one or more instructions may contain a code made by a compiler or a code executable by an interpreter.

Each component (e.g., a module or a program module) according to various embodiments may be composed of single entity or a plurality of entities, a part of the above-described sub-components may be omitted, or other sub-components may be further included. Alternatively or additionally, after being integrated in one entity, some components (e.g., a module or a program module) may identically or similarly perform the function executed by each corresponding component before integration. According to various embodiments, operations executed by modules, program modules, or other components may be executed by a successive method, a parallel method, a repeated method, or a heuristic method, or at least one part of operations may be executed in different sequences or omitted. Alternatively, other operations may be added.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device comprising:
a first plate;
a second plate located to face the first plate, the second plate including a curved portion extending to a lateral surface portion of the electronic device;
a support member of the electronic device located between the first plate and the second plate;
a force sensor located in an interior space formed between the first plate and the second plate, the force sensor including a force sensing surface; and
a sensing assistance structure protruding from the support member to a space between the force sensor and the curved portion,
wherein the force sensing surface of the force sensor faces one surface of the sensing assistance structure.

2. The electronic device of claim 1, further comprising:
a display located in the interior space; and
a waterproof member,
wherein the first plate covers a display area of the display,
wherein the sensing assistance structure includes a curved surface configured to face the curved portion,
wherein the waterproof member is located between the sensing assistance structure and the curved portion, and
wherein the waterproof member is in close contact with the sensing assistance structure and the curved portion.

3. The electronic device of claim 1,
wherein a side bezel structure of the electronic device is configured to connect the first plate and the second plate, and
wherein the sensing assistance structure is integrally formed with at least one of the first plate or the second plate.

4. The electronic device of claim 1,
wherein the support member is configured to form a skeleton of the electronic device, and
wherein the sensing assistance structure is integrally formed with the support member.

5. The electronic device of claim 1,
wherein the support member includes a furrow corresponding to the force sensor, and
wherein the force sensor is located between the furrow and the sensing assistance structure.

6. The electronic device of claim 1, wherein the second plate includes a protrusion on an area of the curved portion corresponding to the force sensor.

7. The electronic device of claim 1, wherein the force sensor includes a plurality of sensing channels configured to generate signals, respectively.

8. The electronic device of claim 1, further comprising at least one processor connected with the force sensor,
wherein the force sensor is configured to transfer, to the at least one processor, a signal corresponding to a user input on the curved portion, and
wherein the at least one processor is configured to perform an operation corresponding to the signal received by the at least one processor.

9. The electronic device of claim 8, wherein the at least one processor is further configured to control a volume of audio output by the electronic device based on the at least one processor identifying the signal received by the at least one processor as a slide input.

10. The electronic device of claim 8, wherein the at least one processor is further configured to perform an operation of turning on or off the electronic device based on the at least one processor identifying the signal received by the at least one processor as a long touch input.

11. An electronic device comprising:
a first plate;
a second plate facing the first plate, the second plate including a curved portion extending to a lateral surface portion of the electronic device;
a support member of the electronic device located between the first plate and the second plate;
a sensor support structure protruding from the support member; and
a force sensor located between the sensor support structure and the curved portion.

12. The electronic device of claim 11, further comprising:
a display located in an interior space formed between the first plate and the second plate; and
a waterproof member,
wherein the first plate covers a display area of the display,
wherein the sensor support structure includes a curved surface configured to face the curved portion,
wherein the force sensor is shaped to bend along the curved surface of the sensor support structure, and
wherein the waterproof member is configured to cover at least one surface of the force sensor, and located between the curved surface of the sensor support structure and the curved portion.

13. The electronic device of claim 11, further comprising:
a side bezel structure configured to connect the first plate and the second plate,
wherein the sensor support structure is integrally formed with the first plate and the second plate.

14. The electronic device of claim 11,
wherein the sensor support structure includes a furrow corresponding to the force sensor, and
wherein the force sensor is located between the furrow and the curved portion.

15. The electronic device of claim 11, wherein the second plate includes a protrusion on an area of the curved portion corresponding to the force sensor.
